Europäisches Patentamt

European Patent Office

Office européen des brevets

(19)

(11) Publication number : **0 465 115 A2**

## (12) EUROPEAN PATENT APPLICATION

(21) Application number : **91305802.0**

(22) Date of filing : **26.06.91**

(51) Int. Cl.⁵ : **G06K 7/08,** G06K 19/06, B42D 15/10

(30) Priority : **29.06.90 GB 9014538**

(43) Date of publication of application :
**08.01.92 Bulletin 92/02**

(84) Designated Contracting States :
**AT BE CH DE DK ES FR GB GR IT LI LU NL SE**

(71) Applicant : **GEC AVERY LIMITED
Smethwick
Warley, West Midlands, B66 2LP (GB)**

(72) Inventor : **Sylvester, David John, 3 Wiggins Hill
Cottages
Wiggins Hill Road, Wishaw, Sutton Coldfield
West Midlands, B76 9QE (GB)**

(74) Representative : **Loven, Keith James et al
GEC Patent Department, GEC Marconi
Limited, West Hanningfield Road
Great Baddow Chelmsford, Essex CM2 8HN
(GB)**

(54) Data storage and transfer system.

(57) A magnetic data storage token such as a card has an elongate strip (20) of magnetisable material defined on one face, the strip being divided into at least one read-only (14 or 16) and at least one read-write (15) data region separated from each other by margins which have no data therein. A system for data transfer utilising such a card includes a reader which ignores any magnetic signals in the margins.

EP 0 465 115 A2

The present invention relates to a data storage and transfer system which utilises a token having a strip of magnetisable material thereon, and to a magnetic data storage token.

The invention particularly relates to systems and to tokens in which fresh data may be written into one region of the strip while data in other regions remains stable.

Previously proposed systems, such as those described in GB-A-2157868 and GB-A-2157869, have provided discrete regions of magnetisable material along a token such as a card. The permanent data regions and the renewable data region are aligned but are separated by gaps where no magnetisable material is present. However, such a construction can cause difficulties in manufacture of large numbers of cards, as it is necessary to be able to control accurately the position of the data areas on the card and also to define clearly the limits of the various data areas. It has been found that the edges of the areas do not necessarily comprise sharp transitions from magnetisable to non-magnetisable areas and so this can lead to spurious data signals when each region is being read.

It is an object of the present invention to provide a system which uses a continuous strip of magnetisable material having both types of data defined thereon.

In accordance with the present invention, there is provided a magnetic data storage token comprising a support having an elongate strip of magnetisable material defined thereon, the strip having at least two data regions therein, said data regions having data magnetically recorded therein, each said data region being separated from the next adjacent one of said data regions by a margin having no data recorded therein.

It is particularly preferred that the token comprises a card such as a credit card sized token. In such a case, the strip is parallel to the long axis of the card and defined on one face thereof.

For a three-region card, the first and third regions typically comprise read only data which is not modified in use. The second region typically comprises data which can be revised during use. For a two-region card, the third (read-only) region is omitted.

Preferably, the first and last regions are separated from the edge of the token or card by further margins having no data therein. The data in one or more of the read-only regions is typically defined by three magnetic states of the magnetisable material, namely two states of opposite polarity and one state of no polarity.

The invention also provides a data storage and transfer system comprising a token comprising a support having an elongate strip of magnetisable material defined thereon, the strip having at least two data regions therein, said data regions having data magnetically recorded therein, each said data region being separated from the next adjacent one of said data regions by a margin having no data recorded therein, and a magnetic read/write unit co-operate with said token to read data from each said data region and to write data to only one of said regions.

Typically, the reader comprises means for moving the token past read/write means. The system also conveniently includes sensors for determining the position of the token in relation to the read/write means.

When reading data from the token, the system is typically configured such that a predetermined number of data bits are read from the beginning of the region, said number constituting the amount of data required.

The system is also arranged such that any magnetic signals appearing in the margins or further margins are ignored. When data is to be written into said second region, the presence of the second region under the read/write means is determined by monitoring the data read from the card, which is used to determine card speed and/or position. Information from position sensors can also be used.

The present invention will now be described by way of example, with reference to the accompanying drawings in which;

Figure 1 shows a diagrammatic representation of a prior art card; and

Figure 2 shows a diagrammatic representation of a card according to one embodiment of the present invention.

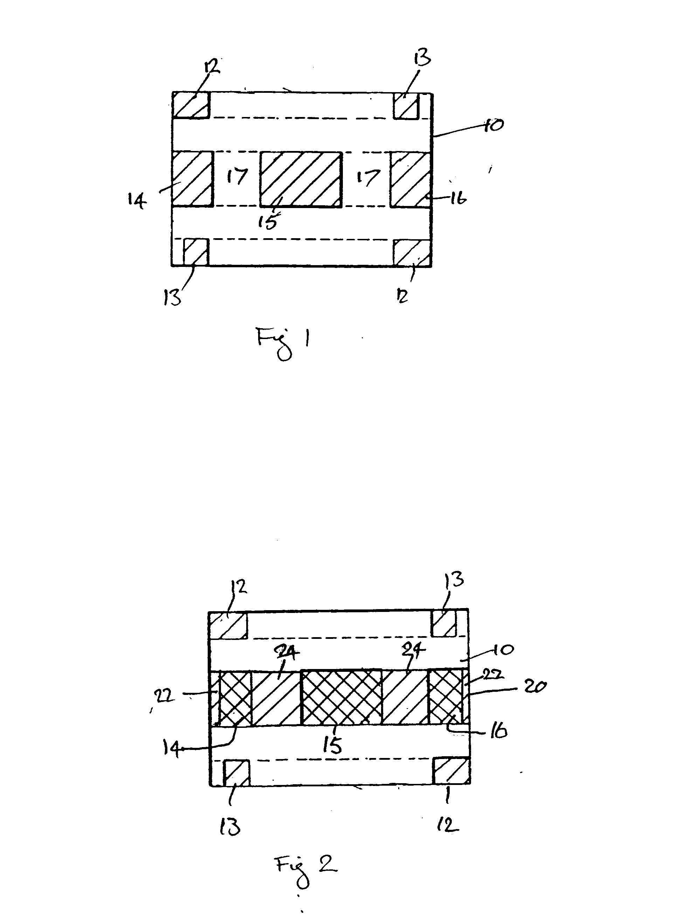

Referring now to Figure 1, the card shown therein is more fully described in GB-A-2157868. The card basically comprises a plastics card 10 of generally credit card dimensions having graphic representations on one face thereof (not shown) and magnetic regions on the other face. A pair of magnetic regions 12, 13 are provided on each long edge of the card, the regions being located in the vicinity of the corner of the card and serving to act as authorisation regions to allow a card to be inserted in to a reader. A data region is defined along central portion on the card aligned with the long axis of the card and comprises a first data region 14 second data region 15 and third data region 16 the regions 14, 15 and 16 all comprise magnetisable material and the second region 15 separated from the first region 14 and third region 16 by gaps 17 in which no magnetisable material is present. In use, the first and third regions comprise permanent data and data in the second region is revised during use. The gaps 17 serve to prevent any confusion between the permanent data and the revisable data and to define the areas to be read by a reading unit.

Referring now to Figure 2, the card is similar to that shown in Figure 1 and corresponding portions have the same reference numerals. However, this card differs in that a single continuous strip of magnetisable material 20 is provided along the card. The data regions 14, 15 and 16 are defined in the strip 20 in similar positions to the regions described in relation to Figure 1. The first and third regions 14 and 16 are each spaced from the nearby edge of the card by a small margin 22 of magnetic material carrying no data. In this case, instead of there being gaps with no magnetisable material, the continuous strip 20 of magnetisable material has margins 24 in which no data is present separating the first and second, and second and third regions. In use, the regions of this card are utilised in same manner as described in relation to Figure 1.

For a two-region card of the same format, the margin 24 and region 16, for example, could be omitted.

A reading unit for use with a card as described in relation to Figure 2 is essentially the same as that described in GB-A-2157868 and operates in essentially the same manner. However, in the present case the reader head is only enabled at the start of the second region 15 rather than half way between the first or third region and the second region. This can be achieved by the appropriate sensors and timing signals as described in the earlier patent. The reader unit is caused to ignore any magnetic signals (ie spurious non-data signals) which appear in the margins 22 and 24 as the position of the head over the strip 20 can be determined and hence the presence or absence of a data region can be calculated.

The margins 22 are selected so as to provide sufficient time for the card to accelerate to the appropriate speed through the reader before any data is transferred in order that an accurate establishment of a card speed can be obtained and hence consistent data bit timings can be obtained.

The cards are manufactured in large sheets with continuous magnetic strips defined across the sheet and the data is imprinted on to the card after the sheet has been cut into the appropriate sized pieces. Consequently, the regions 14, 15 and 16 are only defined after the card has been formed, by the operation of writing the data on to the magnetic strip. This is more easily controllable and more accurate than the previously proposed method of providing separate data areas and allows certain variation in the card manufacturing process without affecting the relationship of the data areas.

## Claims

1. A magnetic data storage token comprising a support having an elongate strip of magnetisable material defined thereon, the strip having at least two data regions therein, said data regions having data magnetically recorded therein, each said data region being separated from the next adjacent one of said data regions by a margin having no data recorded therein.

2. A magnetic data storage token according to Claim 1, wherein the support is a plastics card.

3. A magnetic data storage token according to Claim 1 or 2, wherein the strip has three data regions therein arranged serially along the strip with non-data margins therebetween.

4. A magnetic data storage token according to Claim 1, 2 or 3, wherein the strip extends between opposite edges of the token and a non-data margin is provided in the strip adjacent each of said opposite edges.

5. A magnetic data storage token according to any preceding claim, wherein some or all of the data in at least one of said data regions is defined by three magnetic states of said magnetisable material, comprising two states of opposite polarity and one state of no polarity.

6. A data storage and transfer system, comprising a token comprising a support having an elongate strip of magnetisable material defined thereon, the strip having at least two data regions therein, said data regions having data magnetically recorded therein, each said data region being separated from the next adjacent one of said data regions by a margin having no data recorded therein, and a magnetic read/write unit co-operable with said token to read data from each said data region and to write data to only one of said regions.

7. A data storage and transfer system according to Claim 6, wherein said read/write unit comprises means for moving the token past read/write means in said unit.

8. A data storage and transfer system according to Claim 7, comprising sensors for determining the position of the token in relation to the read/write means.

9. A data storage and transfer system according to Claim 6, 7 or 8, wherein said read/write unit is configured to read a predetermined number of data bits from the beginning of each said region.

Fig 1

Fig 2